(19) Europäisches Patentamt
European Patent Office
Office européen des brevets

(11) Publication number: **0 044 840**
**B1**

(12) **EUROPEAN PATENT SPECIFICATION**

(45) Date of publication of patent specification: **26.06.85**

(21) Application number: **81900195.9**

(22) Date of filing: **23.12.80**

(86) International application number:
**PCT/US80/01715**

(87) International publication number:
**WO 81/02137 06.08.81 Gazette 81/19**

(51) Int. Cl.$^4$: **B 32 B 3/30,** H 04 N 5/76,
G 11 B 3/20, G 11 B 7/24,
G 11 B 23/18

# (54) INFORMATION CARRYING DISCS.

(30) Priority: **01.02.80 US 117466**
**01.02.80 US 117478**

(43) Date of publication of application:
**03.02.82 Bulletin 82/05**

(45) Publication of the grant of the patent:
**26.06.85 Bulletin 85/26**

(84) Designated Contracting States:
**CH DE FR GB LI NL**

(56) References cited:
**GB-A-2 009 996**
**US-A-3 855 426**
**US-A-4 049 861**
**US-A-4 126 726**
**US-A-4 130 620**
**US-A-4 152 487**
**US-A-4 157 931**
**US-A-4 161 588**
**US-A-4 188 433**

**The file contains technical information submitted after the application was filed and not included in this specification**

(73) Proprietor: **MINNESOTA MINING AND MANUFACTURING COMPANY**
**3M Center, P.O. Box 33427**
**St. Paul, MN 55133 (US)**

(72) Inventor: **LEWIS, Terry W.**
**P.O. Box 33427**
**St. Paul, MN 55133 (US)**
Inventor: **ANDERSON, Roger J.**
**P.O. Box 33427**
**St. Paul, MN 55133 (US)**
Inventor: **KERFELD, Donald J.**
**P.O. Box 33427**
**St. Paul, MN 55133 (US)**
Inventor: **LIEN, Larry A.**
**P.O. Box 33427**
**St. Paul, MN 55133 (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 044 840 B1

**Description**

Field of the invention

The present invention relates to information carrying systems and more particularly to discs which carry light readable or stylus readable information. These discs may be useful in carrying information which is convertible to electronic signals for such varied uses as sound recordings, audio/visual recordings, or even computer type information retrieval.

Background of the invention

Information retrieval in the form of discs having information distributed in a circular or spiral pattern has been available in various forms for many years. Early forms of musical reproduction equipment, for example, used discs with either holes or protuberances to pluck an array of strings or vibrating posts to produce music. Early displays of moving pictures operated by rotation of a disc bearing consecutive images on the periphery. The most common form of storing reproductions of musical performances, which has been in use for about one hundred years, is the phonograph record which uses a spiral pattern of grooves having vertical and horizontal modulations to generate signals which can be converted to sound.

With the introduction of the laser to industry, a new information storage system was developed which comprised a disc having a circular or spiral pattern of depressions or protuberances which would disturb, reflect, or refract incident light patterns. These information storing discs, often used for storage of audio/visual information and generally referred to as video discs, are well known in the art. Such U.S. Patents as 3,658,954; 3,795,534; 3,798,134; 3,855,426; 3,901,994; 4,124,672; 4,126,716; and 4,130,620 show various constructions, compositions, and processes for forming video discs.

In addition to the laser readable video disc, another commercial construction is used which is more similar to the classic phonograph recording. This type of construction, as described in RCA Review, Vol. 39, No. 1, March 1978, comprises a spiral array of grooves which is tracked by a stylus. The grooves are impressed with coded information in the form of vertical and/or radial modulations.

Even though these systems are read by totally different techniques, they are affected by similar, if not identical, problems. Imperfections in the depressions, protuberances, or modulations cause undesirable or spurious signals to be generated. The imperfections can be produced during manufacture of the disc or can develop from wear during use or manipulation of the disc.

The present invention relates to information storage discs for use with laser or stylus readout systems which have good fidelity, solvent and grease resistance, and resistance to wear.

Summary of the invention

The present invention comprises an information carrying element comprising a substrate having adhered to at least one surface thereof a separate layer of polymeric material and catalyst or catalyst residue and having a maximum thickness of 1.0 to 100 µm and a circular arc-like or spiral pattern of surface variations in the form of depressions, protuberances, and/or grooves with modulations, the separate layer comprising an abrasion-resistant polymer layer displaying less than 25%, preferably less than 20%, more preferably less than 15% haze according to A.S.T.M. D-1044-76, Resistance of Transparent Plastic Materials to Abrasion, characterised in that said polymer is derived from a composition comprising from 15—100% by weight of a polyacryloyl heterocyclic compound selected from the formulae:

$$A^1\text{—}Z\text{—}A^2 \qquad (1)$$

wherein $A^1$ and $A^2$ independently are alkoxyalkyl groups having terminal ethylenic unsaturation and having the formula

$$R\text{—}O\text{—}CH_2\text{—}\underset{\substack{|\\ R^1}}{\overset{\substack{OR^2\\ |}}{C}}\text{—}R^3\text{—}$$

wherein R—O— is a monovalent residue of an aliphatic terminally unsaturated primary alcohol, ROH, formed by the removal of the active hydrogen from the primary —OH group, R having the formula:

$$[E\text{-}(CH_2\text{-})_b\text{-}]_m R^5\text{-}(CH_2\text{-})_c$$

wherein E is

$$CH_2{=}\underset{\substack{|\\ R^4}}{C}\text{—}\overset{\substack{O\\ \|}}{C}\text{—}O\text{—}$$

c is an integer of from 1 to 6,

b is zero or an integer of from 1 to 6,

$R^1$ and $R^4$ are independently selected from hydrogen and methyl,

$R^5$ is an aliphatic group having from 1 to 15 carbon atoms, and no more than two non-adjacent catenary oxygen or carboxy groups, a valence of m+1,

m is an integer of from 1 to 5,

$R^2$ is selected from hydrogen and groups of the formula

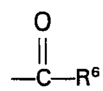

or

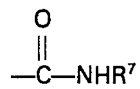

wherein $R^6$ is selected from alkyl and alkenyl groups

$R^7$ is an aliphatic or aromatic group of up to eight carbon atoms,

$R^3$ is an alkylene group of from 1 to 6 carbon atoms with up to one catenary oxygen atom, and

Z is a heterocyclic group of the formula

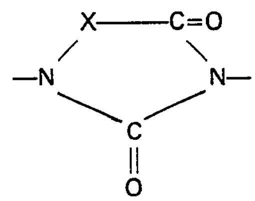

wherein X is a divalent group which is required to complete a 5- or 6-membered heterocyclic ring, or

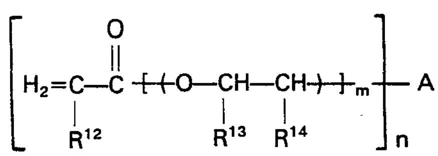 (2)

wherein $R^{12}$ and $R^{13}$ independently represent hydrogen or methyl,

$R^{14}$ represents hydrogen, an alkyl group, or a phenyl group,

$R^{13}$ and $R^{14}$ together may represent a trimethylene or tetramethylene group,

m represents a number of from 1 to 30,

n is 2 or 3, and

A represents a group of the formula

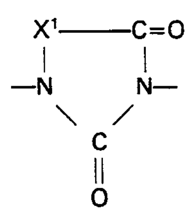

wherein $X^1$ represents the divalent or trivalent radical necessary to complete a 5- or 6-membered heterocyclic ring group. The preferred classes of these materials are a) from formula 1): wherein X is selected from

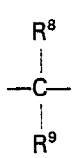, 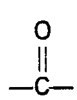, 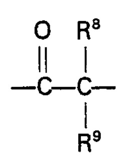, 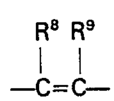, 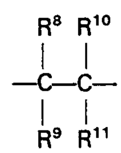, and 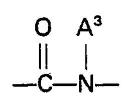

wherein $R^8$, $R^9$, $R^{10}$ and $R^{11}$ are independently hydrogen, alkyl group of 1 to 4 carbon atoms, cycloalkyl group of 3 to 6 carbon atoms, and aryl group (e.g., phenyl group) of 6 to 12 carbon atoms, and

$A^3$ is an alkoxyalkyl group as defined for $A^1$ and $A^2$, and b) from formula 2): wherein m is from 1 to 4, and $X^1$ is selected from

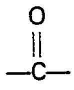, 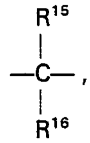, 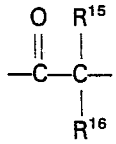, 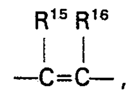, 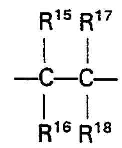, and 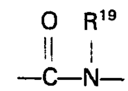

wherein $R^{15}$, $R^{16}$, $R^{17}$ and $R^{18}$ independently represent hydrogen, an alkyl group, an alkylene group, a cycloalkyl group, or a phenyl group, and

$R^{19}$ represents hydrogen, an aliphatic group, or an aromatic group.

It is more preferred, with regard to the preferred compounds of formula 1) that $R^2$ be hydrogen, that X be

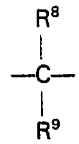

and $R^8$ and $R^9$ be hydrogen or alkyl of 1 to 4 carbon atoms, that m be 2 to 5, that $R^5$ be alkylene of 1 to 15 carbon atoms, and/or that $R^4$ be hydrogen. It is more preferred with regard to formula 2) that $X^1$ be selected from

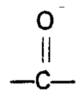, 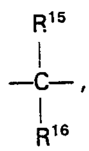, 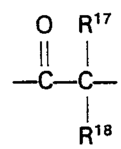, and 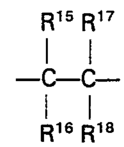

and that $R^{15}$, $R^{16}$, $R^{17}$, and $R^{18}$ be independently selected from hydrogen, alkyl of 1 to 4 carbon atoms, alkylene of 1 to 4 carbon atoms and phenyl. Most preferably $R^{15}$—$R^{18}$ are selected from hydrogen and alkyl of 1 to 4 carbon atoms.

As noted above, the information bearing layer of the discs of the present invention must be formed from a polymeric resin derived from a composition comprising at least 15% by weight of the polyacryloyl heterocyclics. The heterocyclics may of course constitute 100% by weight of reactive or polymeric components in the resin. The compositions used in the process of the present invention may be diluted with up to 85% by weight of any ethylenically unsaturated monomer. Preferably the majority of comonomers are at least diethylenically unsaturated monomers. Generic classes include the acrylates, methacrylates, acrylic anhydrides, ethylenically unsaturated anhydrides, olefinic compounds, acrylamides, ethylenically unsaturated amides and urethanes, vinyl esters, vinyl ethers, vinyl halides, vinyl epoxy resins, vinyl silanes and siloxanes, vinyl heterocyclics, and prepolymers and polymers of these materials. Particularly suitable ethylenically unsaturated monomers include methyl methacrylate, ethyl acrylate, 2-ethylhexyl acrylate, cyclohexyl acrylate, styrene, butadiene, 2-chlorostyrene, 2,4-dichlorostyrene, acrylic acid, acrylamide, acrylonitriles, t-butyl acrylate, methyl acrylate, butyl acrylate, N-vinyl pyrrolidone, 2-(N-butylcarbamyl)ethyl methacrylate and 2-(N-butyl-carbamyl)ethyl methacrylate, and 2-(N-ethyl-carbamyl)ethyl methacrylate. Preferably 35 to 80% and most preferably 45 to 60% by weight of copolymerizable components comprise the heterocyclic agents of the present invention. Other diluting monomers that can be incorporated into the composition of the invention include 1,4-butylene dimethacrylate or acrylate, ethylene dimethacrylate, hexamethylene diacrylate (hexanediol diacrylate) or dimethacrylate, glyceryl diacrylate or methacrylate, glyceryl triacrylate or trimethacrylate, pentaerythritol triacrylate or trimethacrylate, pentaerythritol tetraacrylate or tetramethacrylate, diallyl phthalate, dipentaerythritol pentaacrylate, neopentylglycol triacrylate and 1,3,5-tri(2-methacryloxy-ethyl)*s*-triazine.

The compositions should also contain polymerization or free radical initiators in order to provide more photosensitivity to the system to speed up the cure. Polymerization initiators suitable for use in the compositions of the invention are compounds which liberate or generate a free-radical on addition of energy. Such initiators include peroxy, azo, and redox systems each of which are well known and are described frequently in polymerization art, e.g. Chapter II of *Photochemistry,* by Calvert and Pitts, John Wiley and Sons (1966). Included among free-radical catalysts are the conventional heat activated catalysts such as organic peroxides and organic hydroperoxides; examples are benzoyl peroxide, tertiarybutyl perbenzoate, cumene hydroperoxide, azobis(isobutyronitrile) and the like. The preferred initiators are photopolymerization initiators which facilitate polymerization when the composition is irradiated. Included among such initiators are acyloin and derivatives thereof, such as benzoin, benzoin methyl ether, benzoin ethyl ether, benzoin isopropyl ether, benzoin isobutyl ether, and α-methylbenzoin; diketones such as benzil and diacetyl, etc.; organic sulfides such as diphenyl monosulfide, diphenyl disulfide, decyl phenyl sulfide,

and tetramethylthiuram monosulfide; S-acyl dithiocarbamates, such as S-benzoyl- N,N-dimethyldithiocarbamate; phenones such as acetophenone, α,α,α-tribromoacetophenone, α,α-diethoxy-acetophenone, 2,2-dimethoxy-2-phenyl-acetophenone, o-nitro-α,α,α-tribomacetophenone, benzophenone, and p,p'-tetramethyldiaminobenzophenone; aromatic iodonium and aromatic sulfonium salts; sulfonyl halides such as p-toluenesulfonyl chloride, 1-naphthalenesulfonyl chloride, 2-naphthalenesulfonyl chloride, 1-3-benzenedisulfonyl chloride, 2,4-dinitrobenzenesulfonyl bromide and p-acetamido-benzenesulfonyl chloride. Normally the initiator is used in amounts ranging from about 0.01 to 5% by weight of the total polymerizable composition. When the quantity is less than 0.01% by weight, the polymerization rate becomes extremely low. If the initiator is used in excess of 5% by weight, no correspondingly improved effect can be expected.

The structure of the information carrying discs of the present invention comprises a substrate having the information impressed on the coating layer of polyacryloyl heterocyclic compound on at least one side thereof. The substrate may be substantially any solid material, including but not limited to polymeric materials such as polycarbonates, polyesters, polyacrylates, polyurethanes, polyolefins, polyvinyl resins, polyamides, and polysiloxanes; ceramic or glass materials; fibrous materials; metals; etc. The surface of the substrate to be coated should itself be smooth. It would not be desirable to have surface irregularities having dimensions in excess of 2 μm. The backing may be transparent or opaque depending upon the readout system used. If the backing is opaque, a master transparent to the curing radiation must be used. Primer layers may be used between the substrate and the information carrying layer, but this is not essential depending upon the ability of the coating to adhere to the base. On polyesters, for example, polyvinylidene chloride is a useful primer. The substrate may be of any thickness, but is usually from 50 to 5000 μm. The information carrying layer is critical in its dimensions and must be between 1.0 and 25 μm in its maximum thickness for a video disc and up to 100 μm for an audio disc. The term maximum thickness is used, because the layer, having depressions, protuberances, or grooves thereon, varies in thickness. This limit therefore applies to the maximum thickness of the layer above the substrate. Preferably it is between 2.0 and 20 μm in maximum thickness and most preferably between 3.0 and 10 μm for a video disc. The preferred dimensions are between 15 and 75 μm for an audio disc.

The information is encoded on the information carrying layer as depressions, protuberances, and/or grooves with modulations in either a circular, arc-like (e.g., semicircular, hyperbolic, etc.), or spiral pattern on the layer. The depth or height of the information carrying deformity from the plane of the surface or the mean height of the surface is normally between 0.03 to 2 μm. In laser readout systems, this dimension is usually between 0.03 and 1.5 μm, preferably between 0.05 and 0.8 μm, and more preferably between 0.07 and 0.5 μm. In stylus readout systems, this dimension is usually between 0.05 and 2 μm, preferably between 0.08 and 1.5 μm, and more preferably between 0.10 and 1.0 μm. For an LP record, this dimension is preferably between 25 and 75 μm. The width (peak to peak) between grooves in audio systems is about 60—80 μm.

The light read systems may have a metallized coating over the information carrying surface and another polymer layer, preferably of an abrasion resistant material, over the metal layer, if a reflective rather than transmissive readout system is being used. These coatings can be laid by a variety of manners including vapor deposition or reduction of metal salt solutions.

Alternatively, two reflectively metallized discs may be adhesively secured together so that the two information bearing surfaces are sandwiched in the middle of the composite and information is then read reflectively through a transparent substrate.

Capacitively read discs may have a metallized coating applied to the replicated information bearing surface to provide electrical conductivity. The metallized coating may then be provided with an electrically insulative overlayer.

Replicas to be read with a stylus may also use a lubricant or lubricating layer on the information bearing surface to minimize stylus wear.

Preferably the information is encoded into the information carrying layer in a spiral pattern rather than a circular pattern so that the reading element can follow a single path rather than having to shift from one concentric circle to another.

If the information carrying layer is to be penetrated by light during readout, it must be transmissive of the reading radiation. Ordinarily a fairly narrow band of radiation is used to read the discs so that the information carrying layer may have to be transmissive of at least 50% of the radiation in a 100 nm, 50 nm, or even 30 nm band. Preferably the layer is transmissive of at least 75% to 90% of the radiation within such a band.

The composition of the information carrying layer may include various materials which may improve or not adversely affect the properties of the layer. For example, the use of alkoxy substituted metals in epoxy-terminated silanes such as disclosed in column 5, lines 36—59 of U.S. Patent 4,049,861 will improve the conductivity of the layer and reduce static charge buildup. Polymeric additives such as those disclosed for epoxy-terminated silanes in U.S. Patents 3,955,035 and 4,082,846 may be useful. Flow control aids and surfactants, as are well known in the art, could be added to compositions of the present invention. Dyes could be added to the compositions which would be transmissive of the radiation used to read the encoded information.

There will also, of course, be a residue or an unchanged amount of catalyst or delatentized catalyst in

the composition. A broad range of catalysts has been found useful, but with some more preferred than others. U.S. Patent No. 3,955,035 broadly disclosed the use of Lewis or Bronstad acids for curing epoxy silanes, U.S. Patent No. 4,049,861 discloses highly fluorinated aliphatic sulfonic or sulfonylic acids as catalysts for these materials, U.S. Patent No. 4,101,513 discloses light sensitive polyaromatic onium catalysts, some of which are particularly useful for curing materials according to the present invention, and U.S. Patent No. 4,130,690 shows a class of Lewis acid catalysts of high efficiency for curing epoxy-terminated silanes. The more preferred catalysts are the highly fluorinated aliphatic sulfonylic catalysts, the high efficiency Lewis acid catalysts ($PF_6$, $SbF_6$ and $HSbF_5$) and the complex polyaromatic sulfonium and iodonium salts (i.e., those having $BF_4^-$, $PF_6^-$, $SbF_6^-$, $SbF_5^-OH$ and $ArF_6^-$ as anions).

One important aspect of the present invention is that the low applied pressures and low temperatures associated with the use of liquid compositions allows for the use of non-metallic stampers and masters.

These and other aspects of the present invention will be shown in the following examples.

Example 1

A resin composition was prepared by mixing 60 gms of 1,3 - bis{3 - [2,2,2 - (triacryloyloxymethyl)ethoxy] - 2 - hydroxypropyl} - 5,5 - dimethyl - 2,4 - imidazolidinedione (hereinafter referred to as Compound A) containing about 25% by weight of pentaerythritol tetraacrylate, 40 gms of 1,6-hexanediol diacrylate and 2 gms of 2,2-dimethoxy-2-phenyl-acetophenone. This composition was mixed by shaking and then filtered through a 5 µm filter. The resulting photopolymerizable material was used to make a video disc with a nickel video disc stamper.

Approximately 2.0 $cm^3$ of this photopolymerizable liquid material was spread by a cylindrical coating roller between a nickel video disc stamper and a primed 0.18 mm polyester film. The sheet of polyester film was positioned between the roller and the stamper to serve as the base substrate. The rolling process spread out a bubble free coating of photopolymerizable resin over the surface of the stamper and simultaneously covered it with the polyester sheet. The stamper covered in this manner was then passed several times at 3 cm/sec under a 78.7 watt/cm (200 watt/inch) high intensity, medium pressure Hg vapor lamp. The ultraviolet radiation exposure cured the photopolymerizable liquid, hardening it and bonding it to the primed polyester film. After the exposure, the laminated structure containing the replicated information was easily peeled from the nickel stamper. The sheet was then cut to produce a circular center hole and a circular outside shape, both concentric with the replicated information tracks. The resulting video disc replica had an information bearing layer 10±5 µm thick. The disc lay flat when placed on a level surface. It provided a good television picture when played on a video disc player. The surface displayed a haze value of less than 15% when tested according to A.S.T.M. D-1944-76.

Example 2

A resin composition was prepared by mixing 70 gm of Compound A with 30 gm of hexanediol diacrylate and 2 gm of triarylsulfonium hexafluoro-antimonate photocatalyst (described in assignee's U.S. Patent No. 4173476). The resulting material was used to make a video disc according to the procedure of Example 1. The video disc replica made in this way had a cured information bearing layer 6±2 µm thick. This disc lay flat when placed on a level surface. It provided a good television picture when played on a video disc player. A haze value of less than 10% was obtained according to A.S.T.M. D-1044-76.

Example 3

A resin composition was prepared by mixing 30 gm of Compound A with 70 gm of hexanediol diacrylate and 2 gm of the photoinitiator of Example 2. The resulting material was used to make a video disc according to the procedure of Example 1. The video disc replica made in this way had a cured information bearing layer 5±2.5 µm thick. This disc lay flat when placed on a level surface. It provided a good television picture when played on a video disc player.

**Claims**

1. An information carrying element comprising a substrate having adhered to at least one surface thereof a separate layer of polymeric material and catalyst or catalyst residue and having a maximum thickness of 1.0 to 100 µm and a circular, arc-like or spiral pattern of surface variations in the form of depressions, protuberances, and/or grooves with modulations, the separate layer comprising an abrasion-resistant polymer layer displaying less than 25% haze according to A.S.T.M. D-1044-76, characterized in that said polymer is derived from a composition comprising from 15—100% by weight of a polyacryloyl heterocyclic compound selected from the formulae:

$$A^1—Z—A^2 \qquad 1)$$

wherein $A^1$ and $A^2$ independently are alkoxyalkyl groups having terminal ethylenic unsaturation and having the formula

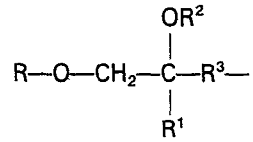

wherein R—O— is a monovalent residue of an aliphatic terminally unsaturated primary alcohol, ROH, formed by the removal of the active hydrogen from the primary —OH group, R having the formula:

$$[E{-}(CH_2)_b]_m R^5{-}(CH_2)_c$$

wherein E is

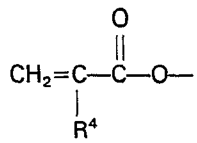

b is 0 or an integer of from 1 to 6

c is an integer of from 1 to 6,

$R^1$ and $R^4$ are independently selected from hydrogen and methyl,

$R^5$ is an aliphatic group having from 1 to 15 carbon atoms, and no more than two non-adjacent catenary oxygen or carboxy groups, a valence of m+1.

m is an integer of from 1 to 5,

$R^2$ is selected from hydrogen and groups of the formula

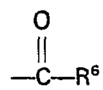

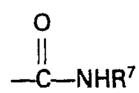

wherein $R^6$ is selected from alkyl and alkenyl groups

$R^7$ is an aliphatic or aromatic group of up to eight carbon atoms,

$R^3$ is an alkylene group of from 1 to 6 carbon atoms with up to one catenary oxygen atom, and

Z is a heterocyclic group of the formula

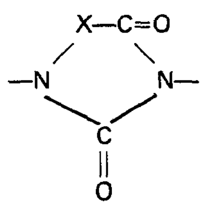

wherein X is a divalent group which is required to complete a 5- or 6-membered heterocyclic ring, or

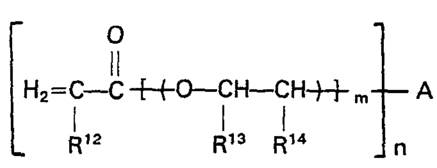

(2)

wherein $R^{12}$ and $R^{13}$ independently represent hydrogen or methyl,

$R^{14}$ represents hydrogen, an alkyl group, or a phenyl group,

$R^{13}$ and $R^{14}$ together may represent trimethylene or tetramethylene group,

m represents a number of from 1 to 30,

n is 2 or 3, and

A represents a group of the formula

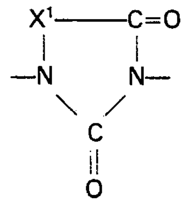

wherein $X^1$ represents the divalent or trivalent radical necessary to complete a 5- or 6-membered heterocyclic ring group.

2. The element of claim 1 wherein said heterocyclic is selected from formula 2), m is 1 to 4, and $X^1$ is selected from

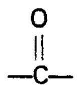, 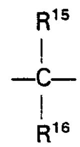, 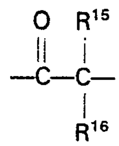, 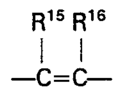, 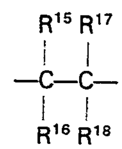, and 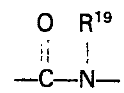

wherein $R^{15}$, $R^{16}$, $R^{17}$ and $R^{18}$ independently represent hydrogen, an alkyl group, an alkylene group, a cycloalkyl group, or a phenyl group, and

$R^{19}$ represents hydrogen, an aliphatic group, or an aromatic group.

3. The element of claim 1 wherein said heterocyclic is selected from formula 1) and X is selected from:

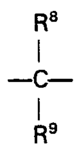, 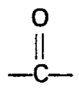, 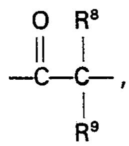, 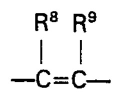, 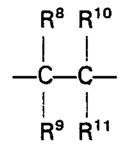, and 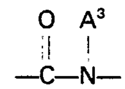

wherein $R^8$, $R^9$, $R^{10}$, and $R^{11}$ are independently hydrogen, alkyl group of 1 to 4 carbon atoms, cycloalkyl group of 3 to 6 carbon atoms, or phenyl group of 6 to 12 carbon atoms, and

$A^3$ is an alkoxyalkyl group as defined for $A^1$ and $A^2$.

4. The element of claim 3 wherein X is

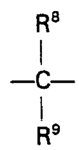

and $R^8$ and $R^9$ are hydrogen or alkyl of 1 to 4 carbon atoms and $R^2$ is hydrogen.

5. The element of claim 3 wherein X is

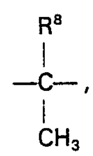,

m is 2 to 5, and $R^5$ is alkylene.

6. The element according to any of claims 1 to 5 wherein said substrate is transparent and said pattern is a spiral pattern of depressions and/or protuberances having vertical dimensions of between 0.03 to 2 µm.

7. The element of claim 6 wherein said separate layer has a metal coating thereon.

8. An element according to claim 6 characterized in that the haze value is less than 15%.

**Patentansprüche**

1. Informationstragendes Element mit einem Substrat, an dem auf mindestens einer Fläche eine eigene Schicht haftet, die aus polymerer Substanz und Katalysator oder Katalysatorrückstand besteht und eine maximale Dicke von 1,0 bis 100 µm hat und ein kreisförmiges, bogenförmiges oder spiralförmiges Muster aus Unebenheiten in Form von Vertiefungen, Erhöhungen und/oder Rillen mit Modulationen besitzt, wobei die eigene Schicht eine abriebbeständige Polymerschicht aufweist, die eine Trübung von weniger als 25% nach ASTM D-1044-76 besitzt, dadurch gekennzeichnet, daß das genannte Polymer von

einer Zusammensetzung abgeleitet ist, die zu 15 bis 100 Gew.% aus einer heterozyklischen Polyacryloylverbindung besteht, die aus den Verbindungen folgender Formeln ausgewählt ist:

$$A^1—Z—A^2 \qquad 1)$$

in der $A^1$ und $A^2$ unabhängig voneinander Alkoxyalkylgruppen sind, die endständig ethylenisch ungesättigt sind und die Formel

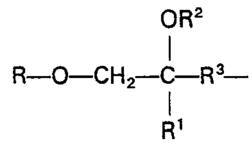

haben, in der R—O ein einwertiger Rest eines endständig ungesättigten aliphatischen primären Alkohols, ROH, ist der durch die Abspaltung des aktiven Wasserstoffs von der primären —OH-Gruppe gebildet wird, wobei R die Formel

$$[E{+}CH_2{+}_b{+}_m R^5{+}CH_2{+}_c$$

hat, in der E die Bedeutung

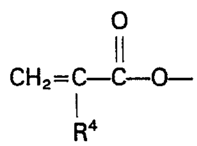

hat b gleich null oder eine ganze Zahl von 1 bis 6 ist,

c eine ganze Zahl von 1 bis 6 ist,

$R^1$ und $R^4$ unabhängig voneinander ausgewählt sind aus Wasserstoff und Methyl,

$R^5$ eine aliphatische Gruppe mit 1 bis 15 Kohlenstoffatomen und höchstens zwei einander nicht benachbarten Sauerstoffatomen oder Carboxygruppen in der Kette und mit der Wertigkeit m+1 ist,

m eine ganze Zahl von 1 bis 5 ist,

$R^2$ ausgewählt ist aus Wasserstoff und den Gruppen der Formel

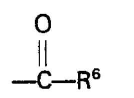

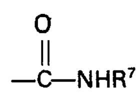

in der $R^6$ aus den Alkyl- und Alkenylgruppen ausgewählt ist,

$R^7$ eine aliphatische oder aromatische Gruppe mit bis zu acht Kohlenstoffatomen ist,

$R^3$ eine Alkylengruppe mit 1 bis 6 Kohlenstoffatomen und bis zu einem Kettensauerstoffatom ist und

Z eine heterozyklische Gruppe der Formel

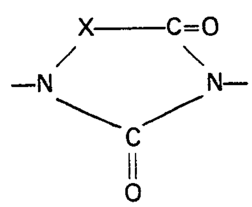

ist, in der X eine zweiwertige Gruppe ist, die zum Schließen eines heterozyklischen Fünf- oder Sechsringes erforderlich ist; oder

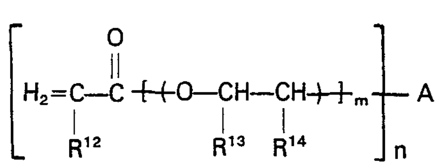

(2)

wobei $R^{12}$ und $R^{13}$ unabhängig voneinander Wasserstoff oder Methyl bedeuten,

$R^{14}$ Wasserstoff, eine Alkylgruppe oder eine Phenylgruppe bedeutet,

$R^{13}$ und $R^{14}$ zusammen eine Trimethylen- oder Tetramethylen-gruppe darstellen können,

m eine Zahl von 1 bis 30 ist,

n gleich 2 oder 3 ist und

A eine Gruppe der Formel

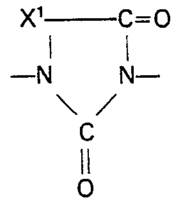

darstellt, in der $X^1$ ein zwei- oder dreiwertiges Radikal darstellt, das zum Schließen einer heterozyklischen Fünf- oder Sechsringgruppe erforderlich ist.

2. Element nach Anspruch 1, dadurch gekennzeichnet, daß die heterozyklische Verbindung eine Verbindung der Formel 2 ist, m gleich 1 bis 4 ist und $X^1$ aus den Verbindungen der Formeln

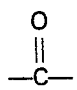, 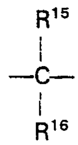, 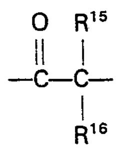, 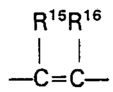, 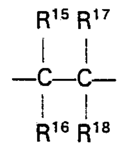, und 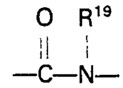

ausgewählt ist, in denen $R^{15}$, $R^{16}$, $R^{17}$ und $R^{18}$ unabhängig voneinander Wasserstoff, eine Alkylgruppe, eine Alkylengruppe, eine Cycloalkylgruppe oder eine Phenylgruppe darstellen und

$R^{19}$ Wasserstoff oder eine aliphatische oder aromatische Gruppe darstellt.

3. Element nach Anspruch 1, dadurch gekennzeichnet, daß die heterozyklische Verbindung aus den Verbindungen der Formel 1) ausgewählt ist und X ausgewählt ist aus den Verbindungen der Formeln

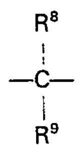, 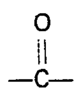, 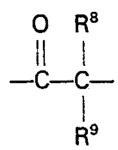, 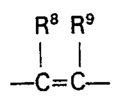, 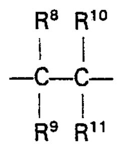, und 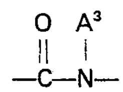

in denen $R^8$, $R^9$, $R^{10}$ und $R^{11}$ unabhängig voneinander Wasserstoff, eine Alkylgruppe mit 1 bis 4 Kohlenstoffatomen, eine Cycloalkylgruppe mit 3 bis 6 Kohlenstoffatomen oder eine Phenylgruppe mit 6 bis 12 Kohlenstoffatomen bedeuten und $A^3$ eine Alkoxyalkylgruppe entsprechend der für $A^1$ und $A^2$ gegebenen Definition ist.

4. Element nach Anspruch 3, dadurch gekennzeichnet, daß X

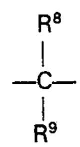

ist und $R^9$ und $R^9$ Wasserstoff oder ein Alkyl mit 1 bis 4 Kohlenstoffatomen sind und $R^2$ Wasserstoff ist.

5. Element nach Anspruch 3, dadurch gekennzeichnet, daß X

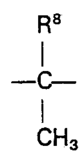

ist, m gleich 2 bis 5 und $R^6$ Alkylen ist.

6. Element nach einem der Ansprüche 1 bis 5, dadurch gekennzeichnet, daß das Substrat durchsichtig ist und das genannte Muster ein Spiralmuster von Vertiefungen und/oder Erhöhungen mit vertikalen Abmessungen von 0,03 bis 2 µm ist.

7. Element nach Anspruch 6, dadurch gekennzeichnet, daß auf der eigenen Schicht ein Metallüberzug vorgesehen ist.

8. Element nach Anspruch 6, dadurch gekennzeichnet, daß die Trübung niedriger ist als 15 %.

**Revendications**

1. Elément porteur d'information comprenant un substrat à au moins une surface duquel adhère une couche séparée de polymère et de catalyseur ou résidu de catalyseur, ayant une épaisseur maximale de 1,0 à 100 µm et présentant un tracé circulaire, en arc ou en spirale de variations de surface sous la forme de dépressions, de protubérances et/ou de sillons à modulations, la couche séparée comprenant une couche de polymère résistant à l'abrasion qui présente un voile optique inférieur à 25% selon la norme A.S.T.M. D-1044-76, caractérisé en ce que ledit polymère est dérivé d'une composition comprenant de 15 à 100% en poids d'un composé hétérocyclique de polyacryloyle choisi parmi les formules:

$$A^1—Z—A^2 \qquad 1)$$

dans laquelle $A^1$ et $A^2$ sont indépendamment des groupes alkoxyalkyl à insaturation éthylénique terminale et de formule:

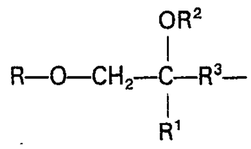

dans laquelle R—O— est un résidu monovalent d'un alcool primaire aliphatique terminalement insaturé, ROH, obtenu par l'élimination de l'hydrogène actif du groupe primaire —OH, R ayant la formule:

$$[E{+}CH_2{+}_b{+}_m R^5{+}CH_2{+}_c$$

dans laquelle E est

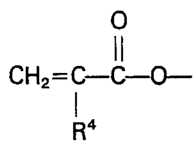

b est un nombre entier de 1 à 6,

c est zéro ou un nombre entier de 1 à 6,

$R^1$ et $R^4$ sont choisis indépendamment parmi H et $CH_3$,

$R^5$ est un groupe aliphatique possédant de 1 à 15 atomes de carbone, et pas plus de 2 oxygènes caténaires non adjacents ou groupes carboxy, et ayant une valence de m+1,

m est un nombre entier de 1 à 5,

$R^2$ est choisi parmi l'hydrogène et les groupes de formule:

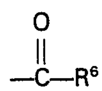

ou

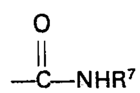

dans laquelle $R^6$ est choisi parmi des groupes alkyle et alkényle,

$R^7$ est un groupe aliphatique ou aromatique ayant jusqu'à 8 atomes de carbone,

$R^3$ est un groupe alkylène possédant de 1 à 6 atomes de carbone et jusqu'à 1 atome d'oxygène caténaire, et

Z est un groupe hétérocyclique de formule:

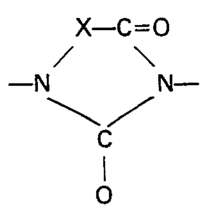

dans laquelle X est un groupe divalent qui est nécessaire pour compléter un hétérocyclique à 5 ou 6 sommets, ou

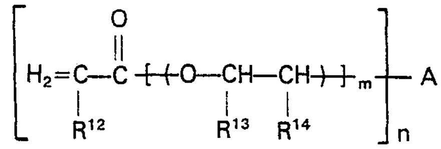 (2)

dans laquelle $R^{12}$ et $R^{13}$ représentent indépendamment H ou $CH_3$,
$R^{14}$ représente l'hydrogène, un groupe alkyle ou un groupe phényle,
$R^{13}$ et $R^{14}$ considérés ensemble peuvent représenter un groupe triméthylène ou tétraméthylène,
m représente un nombre de 1 à 30,
n est 2 ou 3, et
A représente un groupe de formule:

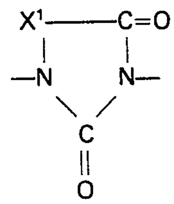

dans laquelle $X^1$ représente le radical divalent ou trivalent nécessaire pour compléter un hétérocyclique à 5 ou 6 sommets.

2. Elément selon la revendication 1, dans lequel ledit composé hétérocyclique est choisi dans la formule 2), m est 1 à 4, et $X^1$ est choisi parmi les composés:

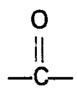, 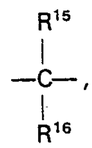, 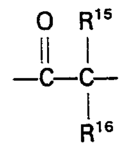, 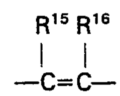, 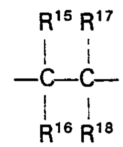, et 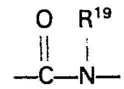

dans lesquels $R^{15}$, $R^{16}$, $R^{17}$ et $R^{18}$ représentent indépendamment l'hydrogène, un groupe alkyle, un groupe alkylène, un groupe cycloalkyle ou un groupe phényle, et
$R^{19}$ représente l'hydrogène, un groupe aliphatique ou un groupe aromatique.

3. Elément selon la revendication 1, dans lequel ledit composé hétérocyclique est choisi dans la formule 1) et X est choisi parmi les composés:

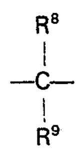, 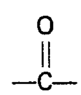, 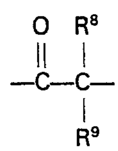, 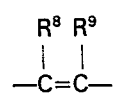, 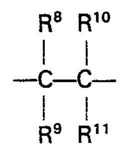, et 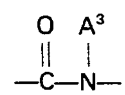

dans lesquels $R^8$, $R^9$, $R^{10}$ et $R^{11}$ sont indépendamment l'hydrogène, un groupe alkyle de 1 à 4 atomes de carbone, un groupe cycloalkyle de 3 à 6 atomes de carbone ou un groupe aryle de 6 à 12 atomes de carbone, et
$A^3$ est un groupe alkoxyalkyle comme défini pour $A^1$ et $A^2$.

4. Elément selon la revendication 3, dans lequel X est

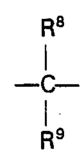,

et $R^8$ et $R^9$ sont l'hydrogène ou un groupe alkyle de 1 à 4 atomes de carbone, et
$R^2$ est l'hydrogène.

5. Elément selon la revendication 3, dans lequel X est

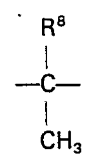,

m est 2 à 5, et
$R^5$ est un groupe alkylène.

6. Elément selon l'une quelconque des revendications 1 à 5, dans lequel le substrat est transparent et le tracé est un tracé en spirale de dépressions et/ou de protubérances ayant des dimensions verticales comprises entre 0,03 et 2 µm.

7. Elément selon la revendication 6, dans lequel la couche séparée reçoit un revêtement métallique.

8. Elément selon la revendication 6, caractérisé en ce que la valeur du voile optique est inférieure à 15%.